Europäisches Patentamt

European Patent Office

Office européen des brevets

(11) Publication number: **0 360 212**
**A2**

## EUROPEAN PATENT APPLICATION

(21) Application number: **89117291.8**

(22) Date of filing: **19.09.89**

(51) Int. Cl.5: **C09D 11/02**

(30) Priority: **19.09.88 US 246480**

(43) Date of publication of application:
**28.03.90 Bulletin 90/13**

(84) Designated Contracting States:
**AT CH DE ES FR GB IT LI NL**

(71) Applicant: **BASF Corporation**
**9 Campus Drive**
**Parsippany, NJ 07054(US)**

(72) Inventor: **Ely, James K.**
**121 Glen Oaks Road**
**Charlotte North Carolina 28226(US)**

(74) Representative: **Welzel, Gunther, Dr. et al**
**c/o BASF Aktiengesellschaft**
**Carl-Bosch-Strasse 38**
**D-6700 Ludwigshafen(DE)**

(54) **Fast drying water inks.**

(57) Fast drying, waterborne printing inks containing a salt of a weak base and a strong acid are described. The printing inks include water, an organic binder selected from salts of carboxylated resins and carboxylated polymers, a pigment dispersed in the organic binder, and the salt of a weak base and strong acid. Optionally, the compositions also include a cross-linker for cross-linking the organic binder.

EP 0 360 212 A2

## FAST DRYING WATER INKS

The present invention relates to fast drying water inks including a water-soluble organic vehicle. More particularly, the present invention relates to a fast drying water ink composition which speeds ink functional drying.

Water inks make up an important segment of the printing ink industry. Increased awareness of the environmental hazards of allowing organic solvent vapors to enter the atmosphere, and the economy resulting from the substitution of water for some or all of the solvents in a printing ink composition, are all factors militating in favor of waterborne printing ink compositions.

In general, water inks contain amine or ammonium salts of carboxylated resins or carboxylated polymers. Amine or ammonia forms water soluble salts of otherwise water insoluble carboxylated resins or carboxylated polymers. When the water inks are printed, they dry by the evaporation of water and ammonia and or amine and by the penetration of water and amine into the paper substrate. It is known that functional drying of these waterborne inks can be accelerated by rendering the resin insoluble in the water after application of the ink to the substrate, even if the water has not completely evaporated. Functional drying is drying until the inks are no longer sticky and do not transfer to the printing press turn rolls, dies, etc. Functionally dry inks are also dry enough to allow superimposition of wet inks at subsequent print stations (known as trapping). This happens because the ink film becomes less sticky.

The functional drying of water inks containing salts of carboxylated resins or polymers can be accelerated by rendering the salts of the carboxylated resins or polymers insoluble in the water after application of the inks. One method of rendering the salts of carboxylated resins and polymers insoluble in water is by the addition of rapidly reacting cross-linkers, such as aziridines or ammonium complexes of multivalent cations such as zinc or zirconium.

The addition of these cross-linking compounds has improved the functional drying speed of waterborne inks substantially. However, the waterborne inks are still slow drying particularly because the evaporation rate of water is generally significantly less than the evaporation rate of the organic solvents which it has replaced. Also, the addition of cross-linking agents alone suffers from disadvantages such as premature insolubility of the organic binder caused by cross-linking which impairs the print quality. Another disadvantage of employing cross-linking agents alone is that a rapid change in ink viscosity can occur with only a small pH change due to slight evaporation of amine or ammonia from the composition. These disadvantages impair the quality and consistency of results obtainable by printing processes employing these inks.

Thus, there is a need in the art for improved waterborne printing ink compositions which dry at an increased rate of speed without detrimentally affecting other properties of the ink.

According to the present invention, there is provided a waterborne, fast-drying printing ink composition which includes water, a cross-linkable organic binder selected from water-soluble salts of carboxylated resins or polymers, and a pigment. The composition further includes a sufficient amount of at least one salt of a strong acid and a weak base to decrease the drying time of the waterborne ink composition.

In a second aspect of the present invention, there is provided a fast drying waterborne ink composition which includes water, a cross-linkable organic binder selected from water-soluble salts of carboxylated resins or polymers, a pigment, a sufficient amount of at least one salt of a strong acid and a weak base to decrease the drying time required to dry the waterborne ink composition, and a sufficient amount of at least one cross-linking compound for the organic vehicle.

Accordingly, it is the primary object of the present invention to provide a waterborne printing ink which requires less time to functionally dry than present, commercially-available waterborne printing inks.

It is a further object of the present invention to provide a waterborne printing ink which will allow faster printing speeds, better trapping, and result in less transfer of ink to rollers and die cutters following the printing operation.

It is a further object of the present invention to provide a waterborne printing ink which functionally dries quicker and thus reduces the transfer of ink in a rewind (commonly referred to as offset).

It is a still further object of the present invention to provide a waterborne printing ink which functionally drys faster than conventional waterborne printing inks without a reduction in the printability of the ink.

These and other objects of the present invention will be apparent to one of ordinary skill in the art from the detailed description which follows.

In accordance with this invention, improved waterborne inks are obtained by the addition of salt of a weak base and a strong acid to produce significantly shorter functional drying times. The resultant printing inks exhibit faster functional drying times than comparable waterborne inks and produce at least the same print quality.

The invention provides a printing ink including a pigment dispersed in a vehicle consisting of or comprising a binder of a water-soluble salt of a carboxylated resin or of a polymer, and water, and a sufficient amount of at least one salt of a strong acid and a weak base to decrease the functional drying time of the waterborne ink composition.

The primary component of the present ink compositions is water which acts as a vehicle for application of the inks. The inks dry by evaporation of this water as well as other volatile components of the ink composition. In some compositions, it may be desirable to include some alcohol in the vehicle in order to improve the solubility of the organic binder. The more volatile alcohols such as isopropanol are preferred since the alcoholic component will have to evaporate in order to complete drying of the ink composition.

The organic binder in the waterborne inks of the present invention is selected from water-soluble salts of carboxylated resins or polymers. During the ink drying process the base on which the cation of the organic binder is based evaporates. Thus, it is desirable to choose bases for the organic binder cations which are highly volatile in order to accelerate the drying rate as much as possible. Accordingly, cations such as those derived from ammonia and volatile amines are preferred cations for the organic binder material. Other highly volatile cations may also be used.

The anion component of the organic binder salt is a polymer of some sort containing carboxylic groups and more preferably a carboxylated resin. Suitable anionic resins include, anionic acrylics, anionic polyurethanes, anionic polyesters, and anionic alkyds. Examples of suitable anionic resins are acrylic acid copolymers with vinyl comonomers such as styrene, alpha-methylstyrene, esters of acrylic and/or methacrylic acid, e.g. methyl methacrylate or hydroxyethyl(meth)acrylates, which copolymers can form water-soluble ammonium salts and/or amine salts. Suitable are e.g. alpha-methylstyrene and ethylacrylate/acrylic acid copolymers. These types of organic binder compositions are generally known to those of ordinary skill in the art of waterborne printing inks.

The anionic resin component of the organic binder composition is preferably cross-linkable. The use of cross-linkable binder compositions provides the ability to cross-link the binder after application of the printing ink in order to further accelerate ink drying and produce improvements in other ink properties which result from cross-linking of the organic binder material. Thus, it is generally desirable to choose an organic binder composition which includes an anionic resin that is cross-linkable. Polymers including acrylic functionalities are preferred for this reason.

The inks of the present invention contain a pigment or pigments dispersed in the organic binder solution. The inks may contain other conventional ink ingredients in minor amounts without departing from the spirit or scope of the invention. For example, hydroxy ethyl cellulose, wax compounds, pigment wetting agents, etc., may be added for their known effects.

The ink composition of the present invention also includes a sufficient quantity of a salt of a weak base and a strong acid which acts to decrease the drying time required to functionally dry the waterborne ink compositions. These salts of weak bases and strong acids have a pH less than 7, preferably less than 6.5 and more preferably less than 5.5. Very suitable are salts having a pH value in the range of from about 4 to about 6.

The anionic, strong acid component of the salt is selected from anions of known strong acids and is preferably nitrate, sulphate, phosphate, or the anion of para-toluenesulphonic acid. In general the strong acids forming the salts should be clearly less volatile than the weak bases, and preferably they should be non-volatile under the drying conditions applied.

The salt of the weak base and strong acid is employed in an amount sufficient to decrease the functional drying time of the waterborne printing ink. Effective amounts of the salts of strong acids and weak bases are from about 1% to about 10% by weight and more preferably, from about 1% to about 3% by weight, based on the amount of the composition. These amounts may vary depending on the particular salt employed.

It has been found that additions of the salt of a weak base and a strong acid cause a significant decrease in the functional drying time of waterborne printing inks. In addition, these waterborne printing inks exhibit excellent properties including improved trapping and less transfer of ink to rollers and die cutters commonly following the printing operation. Further, the inks of the present invention allow faster printing speeds due to their decreased functional drying time. Finally, waterborne inks including this salt exhibit better viscosity stability than waterborne printing inks of similar composition employing only cross-linkers to speed up functional drying.

In order to further improve the drying speed of the present ink compositions cross-linkers may be added to the ink composition. Waterborne inks containing salts of carboxylated resins or polymers can be made to functionally dry more rapidly by the addition of rapidly reacting cross-linkers, such as aziridines or ammonium complexes of multivalent cations such as zinc or zirconium. Other cross-linkers such as zinc

3

oxide or zirconium oxide may also be used. These cross-linkers are preferably exhibit increased reactivity at lower pH. About 0.1% to about 5% and more preferably from about 0.5% to about 3% by weight of crosslinker is employed, based on the amount of the ink composition.

It has been found that the addition of a cross-linking compound in addition to the salt of a weak base and strong acid is the most effective method of reducing functional drying times and of producing the shortest overall functional drying times.

The ink compositions of the present invention are fabricated in the same manner as commercially available waterborne inks. However, in addition to the components of commercially available waterborne inks, the ink compositions of the present invention comprise the salt of a weak base and strong acid in order to shorten the ink functional drying times. This salt may be added to the waterborne ink compositions at any point during their formulation, but it is preferable to add the salt of a weak base and strong acid as the last component during the waterborne ink manufacturing process. The invention will be next illustrated in terms of specific examples. In these examples, as well as in the other parts of the present application, all amounts and proportions are expressed on a weight basis unless otherwise indicated.

## COMPARATIVE EXAMPLE 1

This example compares waterborne ink compositions in accordance with the present invention to the prior art waterborne ink compositions to show the reduced functional drying time of inks fabricated in accordance with the present invention. All of the ink compositions of Example 1 employed a 2-component binder composition of Joncryl 678 and Joncryl 74. Ink #1 is a prior art ink composition.

Inks #2 - 5 are the same as Ink #1 except that they include varying amounts of a salt of a weak base and a strong acid and/or of a zinc oxide cross-linker.

From Table 1 it can be seen that Ink #2 including the ammonium nitrate salt functionally dried much faster than the prior art ink composition containing no ammonium nitrate salt. It can also be seen that Ink #3 including both salt and cross-linker functionally dried the fastest with the exception of Ink #5 which included a large amount of cross-linker.

From these results it can be concluded that ammonium nitrate alone speeds functional drying of these waterborne inks and that zinc oxide cross-linker also speeds functional drying of these waterborne inks. It can be further concluded that ink compositions including a combination of ammonium nitrate salt and zinc oxide cross-linker functionally dried faster than inks including one or the other of these compositions. Further, it can also be concluded that the addition of ammonium nitrate salt allows a reduction in the amount of zinc oxide cross-linker necessary to achieve the fastest functional drying times as shown by a comparison of Inks #3 and #5.

4

Table 1

| INK | 1 | 2 | 3 | 4 | 5 |
|---|---|---|---|---|---|
| Joncryl 678 *) | 13.20 | 12.50 | 12.50 | 12.90 | 12.10 |
| Joncryl 74 **) | 30.00 | 28.50 | 28.50 | 29.30 | 27.50 |
| Tap Water | 27.10 | 28.30 | 27.05 | 26.30 | 28.20 |
| Colloid 999 (Emulgator) | 0.40 | 0.40 | 0.40 | 0.40 | 0.40 |
| Dowicide A (Biocide) | 0.40 | 0.40 | 0.40 | 0.40 | 0.40 |
| Ammonium Hydroxide | 3.30 | 3.10 | 3.10 | 3.20 | 3.00 |
| Ammonium Nitrate | ... | 2.50 | 1.25 | ... | ... |
| 15% ZnO Solution | ... | ... | 2.50 | 2.50 | 5.00 |
| Phthalocyanine Blue | 25.60 | 24.30 | 24.30 | 25.00 | 23.40 |
| TOTAL | 100.00 | 100.00 | 100.00 | 100.00 | 100.00 |
| Relative Functional Drying Rate | 3 | 6 | 10 | 7 | 10 |

*) Joncryl 678 is an ammonium salt of a carboxylated acrylic resin sold by S.C. Johnson & Son Inc., Racine, WI, U.S.A., having an acid value of 200 and being readily soluble in alkaline water (viscosity of 25% in alkaline water 100 cps).

**) Joncryl 74 is a fortified emulsion containing a dispersed phase and a carboxylated acrylic resin and is sold by S.C. Johnson & Son Inc., Racine, WI, U.S.A.

10 = fastest

1 = slowest

## COMPARATIVE EXAMPLE 2

Comparative Example 2 compares prior art ink compositions with ink compositions including varying amounts of a salt of a weak base and a strong acid and a zinc oxide cross-linking solution.

Ink #6 is a prior art ink composition including a binder of an ammonium salt of a carboxylated resin.

Inks #7 - 10 are the same as ink composition #6 except that they include varying amounts of a salt of a weak base and a strong acid and/or of a zinc oxide cross-linker.

From the results shown in Table 2 it can be seen that addition of either the salt of a weak base and a strong acid or the zinc oxide cross-linker significantly improve the functional drying time of waterborne inks. Further, the addition of the salt of a weak base and a strong acid in combination with a zinc oxide cross-linker provided substantially faster functional drying times than inks employing one or the other of these two ingredients. Finally, the table also shows that the addition of ammonium nitrate salt allows a reduction in the amount of zinc oxide cross-linker employed to achieve the same functional drying time.

Table 2

| INK | 6 | 7 | 8 | 9 | 10 |
|---|---|---|---|---|---|
| Joncryl 678*) | 19.70 | 18.70 | 18.70 | 18.70 | 19.20 |
| Tap Water | 45.60 | 45.70 | 44.45 | 43.20 | 44.40 |
| Colloid 999 | 0.50 | 0.50 | 0.50 | 0.50 | 0.50 |
| Dowicide A | 0.50 | 0.50 | 0.50 | 0.50 | 0.50 |
| Ammonium Hydroxide | 4.90 | 4.70 | 4.70 | 4.70 | 4.80 |
| Ammonium Nitrate | ... | 2.50 | 1.25 | ... | ... |
| 15% ZnO Solution | ... | ... | 2.50 | 5.00 | 2.50 |
| Phthalocyanine Blue | 28.80 | 27.40 | 27.40 | 27.40 | 28.10 |
| TOTAL | 100.00 | 100.00 | 100.00 | 100.00 | 100.00 |
| Relative Functional Drying Rate | 3 | 6 | 9 | 10 | 7 |

*) see footnote of Table 1

10 = fastest

1 = slowest

The foregoing description of embodiments of the invention has been presented for purposes of illustration and description. It is not intended to be exhaustive or to limit the invention to the precise forms disclosed, and many modifications and variations will be obvious to one of ordinary skill in the art in light of the above teachings.

**Claims**

1. In a fast drying water ink composition which includes water, a cross-linkable organic vehicle selected from water-soluble salts of carboxylated resins or carboxylated polymers, and a pigment, the improvement comprising the inclusion in said water ink composition of a sufficient amount of at least one salt of a strong acid and a weak base to decrease the drying time of the water ink composition.

2. A water ink composition as claimed in Claim 1 wherein said weak base is volatile.

3. A water ink composition as claimed in Claim 2 wherein said salt of a strong acid and a weak base has a pH less than 6.5.

4. A water ink composition as claimed in Claim 3 wherein said salt of a strong acid and a weak base has a pH from about 4 to about 6.

5. A water ink composition as claimed in Claim 2 wherein said salt of a strong acid and a weak base is selected from the group consisting of ammonium salts and amine salts.

6. A water ink composition as claimed in Claim 5 wherein said salt of a strong acid and a weak base comprises a compound selected from ammonium nitrate, ammonium sulphate, ammonium phosphate, and the ammonium salt of paratoluenesulfonic acid.

7. A water ink composition as claimed in Claim 2 wherein said salt of a strong acid and a weak base comprises from about 1% by weight to about 10% by weight based on the amount of the composition.

8. A water ink composition as claimed in Claim 2 further comprising from about 0.1% by weight to about 5% by weight amount of at least one cross-linking compound for the organic binder.

9. A water ink composition as claimed in Claim 8 wherein said cross-linking compound is selected from the group consisting of aziridines, ammonium complexes of multivalent cations, and oxides of multivalent cations.

10. A water ink composition as claimed in Claim 9 wherein said cross-linking compound is selected from zinc oxide, zirconium oxide, zinc ammonium complex, and zirconium ammonium complex.